# EUROPEAN PATENT SPECIFICATION

(11) **EP 0 398 551 B1**
(45) Date of publication and mention of the grant of the patent: **15.11.1995**
(21) Application number: 90304782.7
(22) Date of filing: 02.05.1990
(51) Int. Cl.: C08K 3/34, C08K 9/08, C08L 77/00

(54) **Method for preparing a polyamide composite material**
Verfahrung zur Herstellung eines Polyamidverbundmaterials
Procédé de préparation d'un matériau composite à base de polyamide

(30) Priority: 19.05.1989 JP 124402/89
(43) Date of publication of application: 22.11.1990
(73) Proprietor: UBE INDUSTRIES, LTD., Ube-shi, Yamaguchi-ken 755 (JP); TOYOTA JIDOSHA KABUSHIKI KAISHA, Aichi-ken (JP); KABUSHIKI KAISHA TOYOTA CHUO KENKYUSHO, Aichi-gun Aichi-ken, 480-11 (JP)
(72) Inventor: Deguchi, Ryuichi, c/o Ube Chemical Factory, Ube-shi, Yamaguchi-ken, (JP); Nishio, Takeyoshi, c/o Toyota Jidosha Kabushiki K., Aichi-ken (JP); Okada, Akane, Obu-shi, Aichi-ken (JP)
(74) Representative: Green, Mark Charles

(56) References cited:
- EP-A- 358 415
- EP-A- 366 382
- BE-A- 677 326
- DE-A- 3 632 865
- US-A- 3 378 514
- US-A- 4 528 235

## Description

### BACKGROUND OF THE INVENTION

This invention relates to a method for preparing a polyamide composite material having excellent mechanical properties and heat resistance and improved dye-affinity and whitening resistance or anti-blooming property during streching.

It is known to blend inorganic materials such as calcium carbonate, clay minerals, mica, etc. with organic polymer materials including polyamides, in order to improve various properties, particularly mechanical properties thereof.

However, since these inorganic materials can not ultrafinely be dispersed into a polyamide only by mixing and kneading them, no polyamide composite having satisfactory properties may be obtained in this manner.

It is also known to produce a polyamide composite by treating clay minerals, particularly layered silicates, with an organic compound such as an amino acid, lactam salt, etc., and polymerizing a monomer in the presence of such a pretreated filler to produce a polyamide composite wherein the polyamide is firmly bound to said filler, in order to enhance affinity or bonding strength between polyamide and inorganic material (see Japanese Patent Publication No. 35211/1983).

However, according to the above method, i.e. the polymerization method, only polyamide composite materials having insufficient dye-affinity, coating property and printing property have been obtained. It was also difficult to efficiently and economically produce a polyamide/layered silicate composite material with high molecular weight of the polyamide and a high content of layered silicate. In the above conventional method, also, a large amount of scrap material is formed when the starting materials for polymerization are changed. Furthermore, it was difficult to uniformly disperse the filler into the polymer.

Therefore, the conventional polyamide composite material, in which the layered silicate is uniformly dispersed therein, has drawbacks in that the end amino groups, which impart dye-affinity, printing properties and whitening resistance to the polyamide, are bonded to the filler. In the conventional preparation method, the production efficiency is low and, with the increase of the content of the layered silicate, the production efficiency will become lower. Also, the layered silicate acts as an end blocking agent and thus it is difficult to increase the polymerisation degree efficiently.

Further, it is difficult or impossible to produce diamine-dicarboxylic acid type polyamide containing a layered silicate in the conventional manner (see Japanese Unexamined Patent Publication No. 221125/1988).

### SUMMARY OF THE INVENTION

An object of the present invention is to solve the above-mentioned problems and to provide a process for the manufacture of polyamide composite materials, in which a layered silicate is uniformly dispersed, and which have good dye-affinity and whitening resistance because blocking of the end amino groups by the filler is minimised. Another object of the present invention is to provide a method for economically, efficiently producing a composite material having wide viscosity range, in which every kind of polyamide resin may be used and the layered silicate is uniformly dispersed at high content therein.

Hence, the invention relates to a method for producing a polyamide composite material having a layered phyllosilicate material uniformly dispersed in a matrix of polyamide polymer, characterised in that the method consists of the following steps:
(a) treating a layered phyllosilicate material formed from magnesium silicate or aluminium silicate having a cation exchange capacity of 50-200 milliequivalents per 100 g to replace any alkali metal ions or alkaline earth metal ions with at least one organic compound selected from ammonium, pyrridinium, sulphonium and phosphonium salts;
(b) mixing 100 parts by weight of the layered phyllosilicate material obtained from step (a) above with 100 to 5000 parts by weight of a dispersion medium which is selected such that the degree of swelling of the layered silicate in the dispersion medium is at least 5 cm³/g; and
(c) blending the layered phyllosilicate material obtained from step (b) above with a polyamide polymer by kneading the constituent components in the following proportions by weight:
100 parts polyamide : 0.05-30 parts layered phyllosilicate.

### BRIEF DESCRIPTION OF THE DRAWINGS

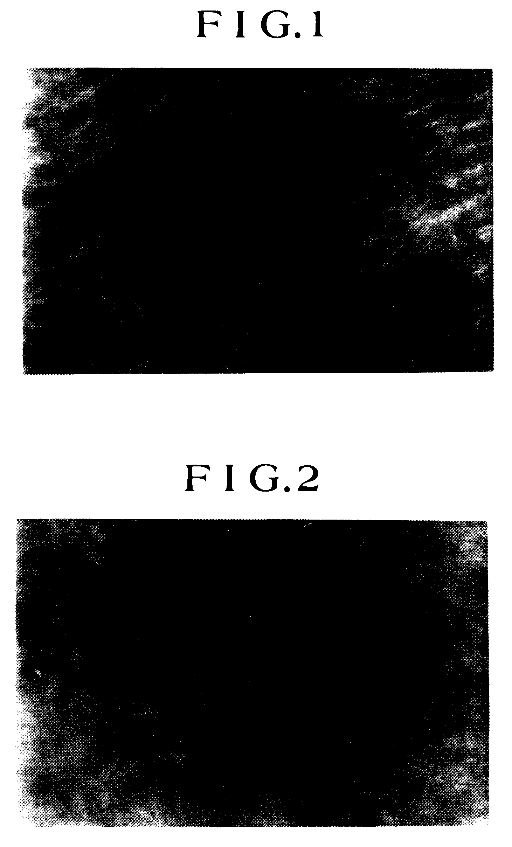

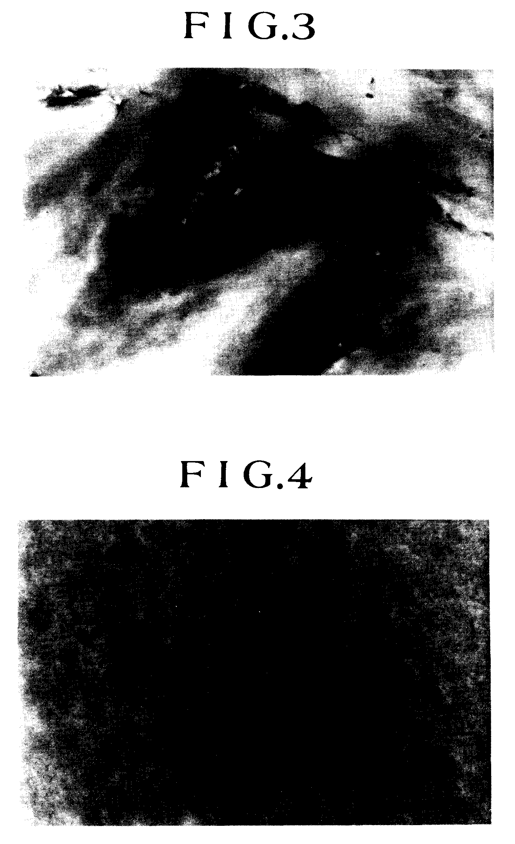

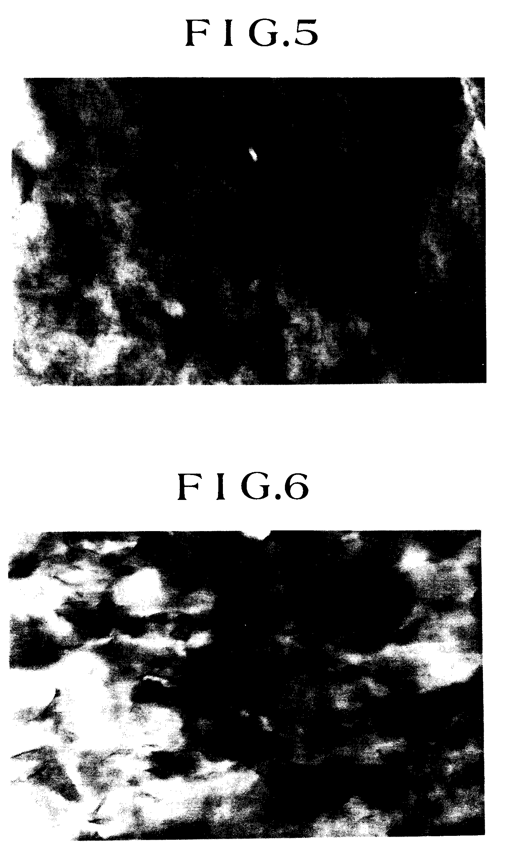

Fig. 1, Fig. 2, Fig. 4 and Fig. 5 are photographs substituting for drawings which show the dispersing state of the layered silicate in the composite materials obtained in examples. Fig. 3 and Fig. 6 are photographs substituting for drawings which show the dispersing state of the layered silicate in the composite materials obtained in comparative examples.

### DESCRIPTION OF THE PREFERRED EMBODIMENTS

The polyamide resins (A) may include any polymers having an acid amide bond (-CONH-) in the molecule, including specifically polymers or copolymers obtained from ε-caprolactam, 6-aminocaproic acid, ω-enantholactam, 7-aminoheptanoic acid, 11-aminoundecanoic acid, 9-aminononanoic acid, α-pyrrolidone and α-piperidone; polymers or copolymers obtained by polycondensation of diamines such as hexamethylenediamine, nonamethylenediamine, undecamethylenediamine, dodecamethylenediamine and metaxylylenediamine, with dicarboxylic acids such as terephthalic acid, isophthalic acid, adipic acid and sebacic acid; or blends of these.

The polyamide (A) should preferably be one having a number average molecular weight of 9,000 to 40,000.

The polyamide (A) may contain other polymers, but the content of the other polymers is less than 90% by weight. Examples of other polymers which may be used include polypropylene, ABS resin, polyphenylene oxide, polycarbonate, polyethyleneterephthalate and polybutyleneterephthalate.

The component (B) is a layered silicate. The component (B) is a component which contributes to impart excellent mechanical properties and heat resistance to the moulded product obtained from the polyamide composite material.

The shape of the layered silicate is preferably one having a thickness of 6 to 20 Å and a particle length within the range 0.002 to 1 µm.

In the process of the present invention, the layered silicate becomes uniformly dispersed in the component (A), with the respective dispersed layers maintaining interlayer distances of 20 Å or more on average. Here, the interlayer distance refers to the distance between the centres of flat plates of the layered silicate, and uniform dispersion refers to the state wherein 50% by weight or more, preferably 70% by weight or more, of the layered silicate is dispersed without local agglomeration, which means that no more than 5 layers of silicate exist in a multi-layer particle, on average. The layered silicate may be dispersed with sheets oriented in parallel, or at random orientations, or in a condition in which both parallel and random orientations exist.

Specifically, there can be included smectite type clay minerals such as montmorillonite, saponite, beidellite, nontronite, hectorite, stevensite, vermiculite and pyroysite, and these can be either natural or synthetic. Among these, montmorillonite is preferred.

The formulation ratio of the component (B) is 0.05 to 30 parts by weight, more preferably 0.1 to 10 parts by weight per 100 parts by weight of the components (A). If the formulation ratio of the component (B) is less than 0.05 part by weight, improvements of rigidity and heat resistance of the molded product are undesirably small, while if it exceeds 30 parts by weight, the flowability of the resin composition will be extremely lowered and mouldability will be lowered and thus the resin composition will become inappropriate as a material for moulding.

The reaction ratio (as defined hereinafter) between the polyamide of the component (A) and the uniformly dispersed layered silicate (B) is 60 % or less, preferably 40 % or less. If the reaction ratio exceeds 60 %, the amount of end groups will undesirably become lower, and thus the dye-affinity, coating property and printing property will become worse, resulting in an adverse effect on appearance of the products such as fibers, injection moulded products, films, tubes, and the like. Sometimes whitening occurs during stretching due to the strong reaction between the layered silicate and polyamide.

The reaction ratio between the layered silicate and polyamide is determined by the method shown below.

### 〈Determination method of the reaction ratio between the polyamide and layered silicate〉

### (Reaction ratio at an overall acid equivalent)

- A:: the acid equivalent of the added layered silicate
- B:: the alkaline equivalent of the added layered silicate
- C:: the acid equivalent when polyamide and layered silicate would not react at all (carboxylic groups of the polyamide + A)
- D:: the acid equivalent when polyamide and layered silicate would completely react (carboxylic groups of the polyamide - B) [provided that the number of amino groups of the polyamide > A]
- E:: the acid equivalent of the material obtained

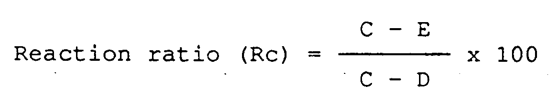

### (Reaction ratio at an overall alkaline equivalent)

- A:: the acid equivalent of the added layered silicate
- B:: the alkaline equivalent of the added layered silicate
- C':: the alkaline equivalent when polyamide and layered silicate would not react at all (amino groups of the polyamide + B)
- D':: the alkaline equivalent when polyamide and layered silicate would completely react (amino groups of the polyamide - A) [provided that the number of carboxylic groups of the polyamide > B]
- E':: the alkaline equivalent of the material obtained

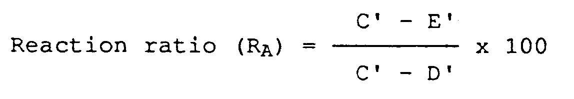

The acid and alkaline equivalents are each determined by titration in appropriate medium. In the present invention, average values of the above R_{c} and R_{A} are employed as the reaction ratio.

The amounts of carboxylic groups and amino groups in the polyamide may be determined by various methods. The relative viscosity, ηᵣ is also determined. From these values, the reaction ratios and the end group maintaining rates may be calculated.

As indicated above, the invention relates to a method of preparing a polyamide composite material. It is an important feature of the method that the layered silicate is mixed with a dispersion medium which causes swelling of the layered silicate prior to mixing with the polyamide polymer. The swelled layered silicate material is mixed with the polyamide polymer for 30 minutes or less, to obtain a composite material in which the layered silicate is uniformly dispersed in the polyamide polymer. In the present invention, "mixing" includes kneading, and may preferably be conducted with kneading. Hereinafter, the mixing step may be considered as including mixing and kneading, mixing and/or kneading, or simply kneading.

In the present invention, "swelling" refers to the phenomenon that the layered silicate absorbs dispersion medium to expand its volume. Layered silicate and dispersion medium have to be selected such that the swelling degree is 5 cc/g or more. The swelling degree may be determined by various methods, but preferably is determined as the ratio of the volume obtained by the sedimentation volume method ("Nendo Handbook", Nihon Nendo Gakukai Shuppan K.K., (1987), p 513 *et Seq*.) and the weight of the layered silicate under absolutely dry conditions. When the swellability of the layered silicate in the dispersion medium is very good, the layered silicate will be ultrafinely dispersed in the dispersion medium and not sedimented by gravity, whereby determination by the above method is impossible.

The swelled condition of the layered, silicate used in the method of the present invention is achieved by using one part by weight or more of a dispersion medium per one part by weight of the layered silicate, the dispersion medium being selected such that it induces a degree of swelling of the layered silicate of 5 cc/g or more.

The layered silicate to be used in the preparation method of the present invention has a cation exchange capacity of 50 to 200 milliequivalents/100 g. If the cation exchange capacity is less than 50 milliequivalents/100 g, swelling cannot be sufficiently effected and the desired composite material can only be obtained with difficulty. If it exceeds 200 milliequivalents/100 g, the bonding force between the layers of the layered silicate becomes too firm and, again, the desired composite material can only be obtained with difficulty.

The layered silicate to be used in the process of the present invention is a layered phyllosilicate formed by magnesium silicate layers or aluminium silicate layers having a layer thickness of 6 to 20 Å, and is charged negatively by the isomorphous ion. Some characteristics of the layered silicate depend on the density and distribution of the negative electric charge and, therefore, the layered silicate preferably has a surface charge density of one negative electric charge per 25 to 200 Å².

The layered silicate should preferably be adjusted previously to the desired shape and size by carrying out crushing treatment by means of mixer, ball mill, vibration mill, pin mill, jet mill, grinder, etc.

Also, alkali ions and alkaline earth metal ions in the layered silicate are substituted by organic groups which are selected from the organic compounds shown below.

As the organic compounds, ammonium salts, pyrridinium salts, sulfonium salts and phosphonium salts, which are onium salts having an onium ion group in the molecule are used.

More specifically, the organic compounds may include those containing an octadecylammonium ion CH₃(CH₂)₁₇N⁺H₃, monomethyloctadecylammonium ion CH₃(CH₂)₁₇N⁺H₂(CH₃), dimethyloctadecylammonium ion CH₃(CH₂)₁₇N⁺H(CH₃)₂, dodecylammonium ion CH₃(CH₂)₁₁N⁺H₃, 4-amino-n-butyric acid ion H₃⁺N(CH₂)₃COOH, 6-amino-n-caproic acid ion H₃⁺N(CH₂)₅COOH, 8-aminocaprylic acid ion H₃⁺N(CH₂)₇COOH, 10-aminodecanoic acid ion H₃⁺N(CH₂)₉COOH, 12-aminododecanoic acid ion H₃⁺N(CH₂)₁₁COOH, 14-aminotetradecanoic acid ion H₃⁺N(CH₂)₁₃COOH, 16-aminohexadecanoic acid ion H₃⁺N(CH₂)₁₅COOH or 18-aminooctadecanoic acid ion H₃⁺N(CH₂)₁₇COOH.

The dispersion medium performs the action of expanding the distance between the silicate layers and making the dispersion of the layered silicate easier in kneading.

The dispersion medium can be selected suitably depending on the kind of the layered silicate, swelling agent and polyamide resin, but one which can disperse uniformly the layered silicate and has good compatibility with the swelling agent and polyamide resin is preferred.

Examples of the dispersion medium include water, methanol, ethanol, propanol, isopropanol, ethylene glycol, 1,4-butane diol, glycerine, dimethylsulphoxide, N,N-dimethylformamide, acetic acid, formic acid, pyridine, aniline, phenol, nitrobenzene, acetonitrile, acetone, methyl ethyl ketone, chloroform, carbon disulphide, propylene carbonate, 2-methoxy ethanol, ether, carbon tetrachloride, n-hexane, ε-caprolactam, ω-lauric lactam, aminocaproic acid and aminododecanoic acid. The dispersion medium can be used singly or in combination of two or more kinds.

Water, methanol, ethanol and/or ε-caprolactam are preferably used as the dispersion medium.

The amount of the dispersion medium employed is 100 to 5,000 parts by weight based on 100 parts by weight of the layered silicate. If the amount of the dispersion medium employed is less than 100 parts by weight, the viscosity of the dispersion becomes excessively high during the mixing and kneading step. This makes feed in the mixing step, and kneading together of the layered silicate and the polyamide polymer undesirably difficult. If the amount of the dispersion medium exceeds 5,000 parts by weight, the dispersion medium is difficult to remove. As a result, a large amount of dispersion medium may remain in the composite material so that the composite material at the outlet of the kneader may contain bubbles. This means that material of stable quality cannot be obtained, large amounts of material will need to be fed into the kneading apparatus and, consequently, uniform kneading will become undesirably difficult.

The method and condition for effecting swelling of the layered silicate is not particularly limited and may, for example, include methods in which the silicate is little by little poured into dispersion medium previously charged and stirred in a vessel.

The mixing condition may also be desirably selected, but it is preferable for achieving the swelled condition not to stir for a long time at high temperature to avoid deterioration of the dispersion medium.

The swelled layered silicate can be subjected to kneading as such, but a part of the dispersion medium may be removed from the layered silicate prior to any subsequent step. In the instance where some dispersion medium is removed, it is necessary to control the content of remaining dispersion medium within the above range.

The mixing and/or kneading step subsequently carried out is a step in which the swelled layered silicate and the polyamide polymer are mixed and kneaded.

The method for mixing and kneading and the condition therefor differ depending on the kind of polymer. The swelled layered silicate may be heated beforehand, if necessary.

In the mixing and kneading step, if necessary, there can be formulated and kneaded mouldability improving agents such as other polymer materials, dyes, pigments, fibrous reinforcing materials, granular reinforcing materials, mould release agents, thickening agents, plasticisers, impact resistance improving agents, foaming agents, heat resistance improving agents and flame retardants.

The composite material obtained by the method of the present invention may be dried as such after being kneaded and then subjected to moulding, or may be dried after the dispersion medium remaining in the composite material is removed by water, followed by moulding.

The composite material may be shaped by injection molding, extrusion molding, heating-compression molding, etc.

### Examples

### Example 1

100 g of montmorillonite produced in Yamagata prefecture with a cation exchange capacity of 119 milliequivalents/100 g, an occupied area per one negative charge: 106 Å², an average layer thickness of 8 Å and the interlayer distance between the layers of 12.5 Å (hereinafter, abbreviated as NaMMT) were dispersed in 2.3 liters of water, and 28.1 g of 12-aminododecanoic acid and 12 ml of conc. hydrochloric acid were added thereto, followed by stirring at 80 °C for 60 minutes. After thoroughly washing, the mixture was suction filtered by use of a Büchner funnel to obtain a modified filler under hydrous state (hereinafter abbreviated as 12 MMT). A part of the filler was sampled and the water content value was determined by the following formula: 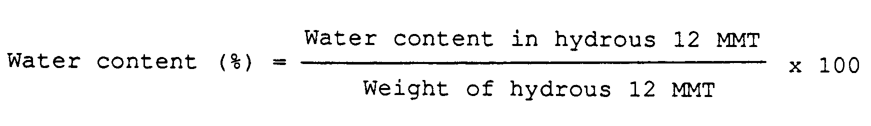
The water content was measured to be 88 %. The interlayer distance in 12 MMT was found to be 18 Å.

Next, water and ε-caprolactam were added to the 12 MMT so that the ratio of 12 MMT, water and ε-caprolactam became 1 : 9 : 9, followed by stirring and mixing.

The swelling degree of the silicate filler was measured to be 14.6 cc/g. The swelling degree was measured by the following method.

A mixture of dried 12 MMT, water and ε-caprolactam being in the ratio of 1 : 50 : 50 was prepared, and thoroughly stirred and mixed. The mixture was charged into a 50 cc-test tube provided with a graduation, centrifuged by a centrifuger at 1,500 rpm, 500 G for 480 minutes to sedimentate the 12 MMT. The sedimentated volume was measured and the measured value was divided by the 12 MMT content (gram) to determine the swelling degree.

Into 98 parts by weight of nylon 6 (average molecular weight: 15,000), 38 parts by weight of the 12 MMT dispersion, which had been prepared by adding water and ε-caprolactam to the 12 MMT, was added, and melted and kneaded in a biaxial extruder with a screw diameter of 30 mm. The resultant product was taken as a strand from the nozzle of the extruder, cooled with water and cut into pellets. The pellets were immersed in hot water and the ε-caprolactam which acted as dispersion medium in the 12 MMT was removed by extraction, followed by drying in vacuum. The interlayer distance of montmorillonite in the composite material obtained by such a treatment was observed by use of a transmission electron microscope.

The transmission electron microphotograph at 15,000 power is shown in Fig. 1.

The results are shown in Table 1. Evaluation of the observations in the transmission electron microscope was conducted in accordance with the standard shown below.
o: excellent dispersibility, some of the silicate layers are paired with others.
△: good dispersibility, no agglomerates having more than 5 layers are recognized.
x: poor dispersibility, considerable amounts of agglomerates having more than 5 layers are recognized.
xx: very poor dispersibility, most of the filler forms agglomerates having more than 5 layers.

The composite material obtained was molded into a test strip. The test strip was subjected to determination of tensile strength, flexural modulus and heat distortion temperature. The results are shown in Table 1.

Also, ηᵣ of the material obtained was determined in accordance with JIS-K 6810, and further the concentration of both amino and carboxylic groups was measured. From these values, the reaction ratio and the "end group maintaining ratio" [100 - (reaction ratio)] were calculated in accordance with the method described above.

The end group maintaining ratio in the composites prepared in accordance with the present invention is more than 40 %, preferably more than 60 %.

A film with a thickness of 60 µ was prepared by using this composite material and stretched at a stretching temperature of 80 °C to each 2-fold laterally and longitudinally, followed by a measurement of transparency (Haze) in accordance with ASTMD-1033.

Also, a plate with a size of 70 mm x 30 mm x 3 mm was prepared by injection molding and evaluated with respect to the dye-affinity.

Dye-affinity was determined by thoroughly immersing the plate in a solution, which was prepared by dissolving 0.075% of an acid dye (Inolar Fast Bril Red S 3B) in purified water and further adding 0.4% of acetic acid, at a bath ratio of 1 : 22 at 76 °C for 5 minutes, and measuring the degree of red pigmentation by means of a digital color meter (manufactured by Suga Shikenki K.K.).

Further, in the above kneading operation, when feeding of the 12 MMT suspension was stopped so that unfilled nylon 6 may be obtained, the amount of intermediate product with a content of 12 MMT ranging from 1.8 % to 30 ppm was only 3.3 kg and thus it was possible to conduct grade changes with insignificant loss.

### Example 2

The experiment of Example 1 was repeated except that nylon 6 (average molecular weight 15,000) was changed to nylon 66 (average molecular weight 20,000).

The transmission electron microphotograph at 15,000 power of the composite material obtained is shown in Fig. 2. The results of measurement are also shown in Table 1.

### Comparative example 1

ε-Caprolactam and 12MMT in the ratio of 108 : 2 and a small amount of polymerization catalyst were continuously fed into a vertical type polymerization column (volumn: 65 liter) from the upper portion at 6 kg/hr, and subjected to polymerization at 260 °C for about 10 hours, followed by continuous extrusion of the polymerized compound at a uniform rate from the bottom of the polymerization column. Further, the unreacted substance of the material was extracted with hot water, and dried in vacuum to obtain a composite material. This composite material was evaluated in the same manner as in Example 1. The results are also shown in Table 1.

In the above operation, when feeding of the 12 MMT was stopped so that unfilled nylon 6 may be obtained, the amount of intermediate product with a content of 12 MMT ranging from 1.8 % to 30 ppm was 5,250 kg.

### Comparative example 2

11 kg of the same monomer and the same polymerization catalyst as in Comparative example 1 were charged in to a batch polymerization bath, and polymerized at 260 °C for 5 hours, followed by extraction with hot water and drying. The obtained composite material was evaluated in the same manner as in Comparative example 1. The results are also shown in Table 1.

### Comparative example 3

The same experiment and evaluation as in Comparative example 2 were conducted except that 12.6 kg of hexamethylenediamine adipate (AH salt) were used as the monomer.

The transmission electron microphotograph at 15,000 power of the composite material obtained is shown in Fig. 3. The results of measurement are also shown in Table 1.

### Example 3

The experiment in Example 1 was repeated except that the ratio of nylon 6 and 12MMT/ε-caprolactam/water suspension was changed to 94.7 : 98.8.

The transmission electron microphotograph at 15,000 power of the composite material obtained is shown in Fig. 4. The results of measurement are shown in Table 2.

### Example 4

The experiment in Example 1 was repeated except that a dispersion of 12MMT in ε-caprolactam in the ratio of 1 : 9 was fed to the extruder at 120°C in a ratio of nylon 6 to dispersion of 98 : 20. The results of measurement are also shown in Table 2.

### Example 5

The experiment in Example 4 was repeated except that water was used as the dispersion medium instead of ε-caprolactam. The results of measurement are also shown in Table 2.

### Comparative Example 4

The experiment in Example 1 was repeated except that the layered silicate was Na montmorillonite (NaMMT).

The transmission electron microphotograph at 15,000 power of the composite material obtained is shown in Fig. 5. The results of measurement are also shown in Table 2.

### Comparative example 5

The experiment in Example 1 was tried to repeat at a ratio of the layered silicate (12MMT) to the dispersion medium of only 1 : 0.5. However, the viscosity of the dispersion was so high that the feed thereof was difficult, resulting in failure of production.

### Comparative example 6

The experiment in Example 1 was repeated except that nylon 6 and a dried layered silicate containing no dispersion medium (obtained by drying and pulverization of 12 MMT) were dry blended at a ratio of 98 : 2 and kneaded. The results of measurement are also shown in Table 3.

### Comparative example 7

The experiment in Comparative example 6 was repeated except that the layered silicate (12MMT) in Comparative example 6 was changed to Na montmorillonite (NaMMT). The results of measurement are also shown in Table 3.

### Comparative example 8

The experiment in Example 4 was repeated except that the layered silicate (12MMT) in Example 4 was changed to Na montmorillonite (NaMMT).

The transmission electron microphotograph at 15,000 power of the composite material obtained is shown in Fig. 6. The results of measurement are also shown in Table 3.

### Referential examples 1 and 2

The experiments in Examples 1 and 2 were repeated without adding the filler.

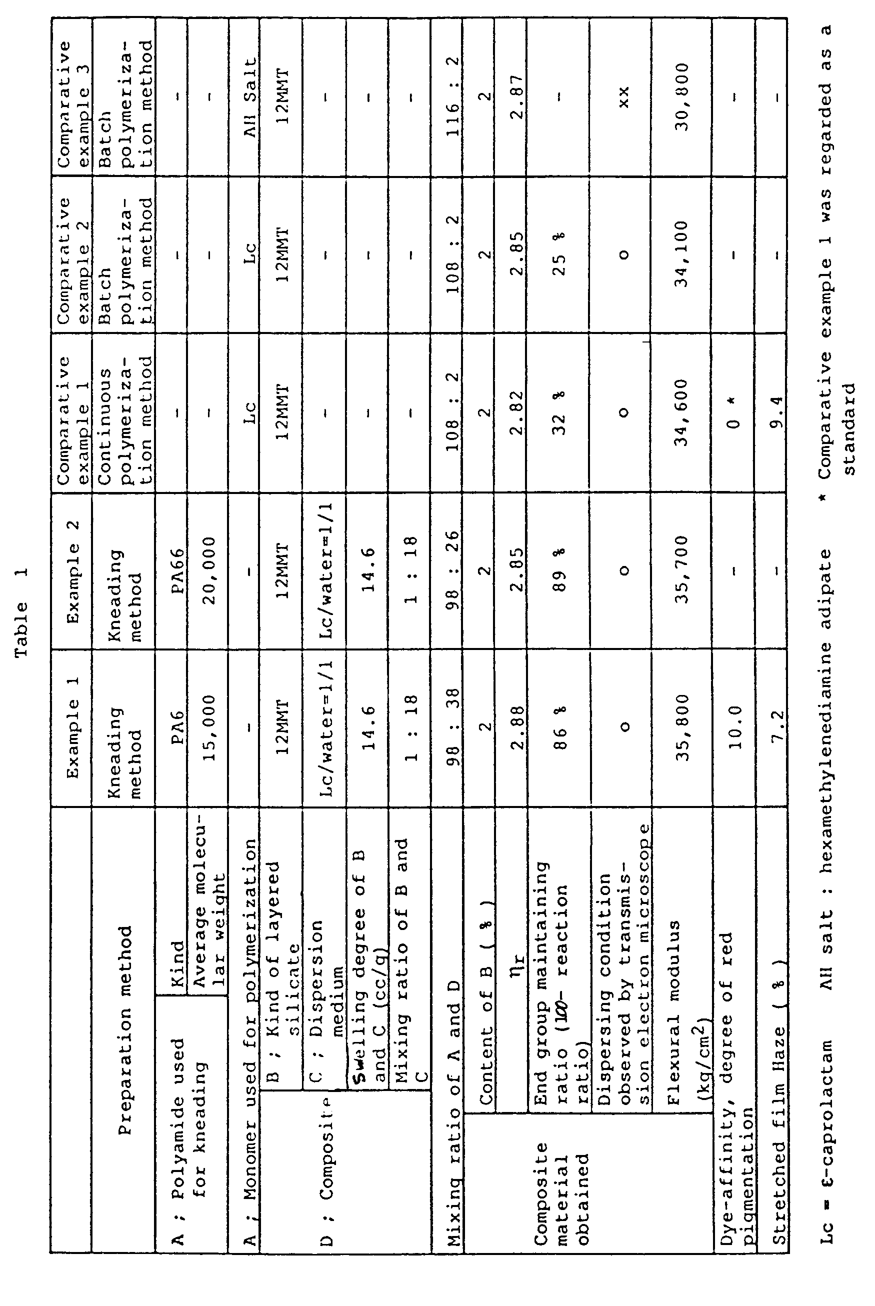

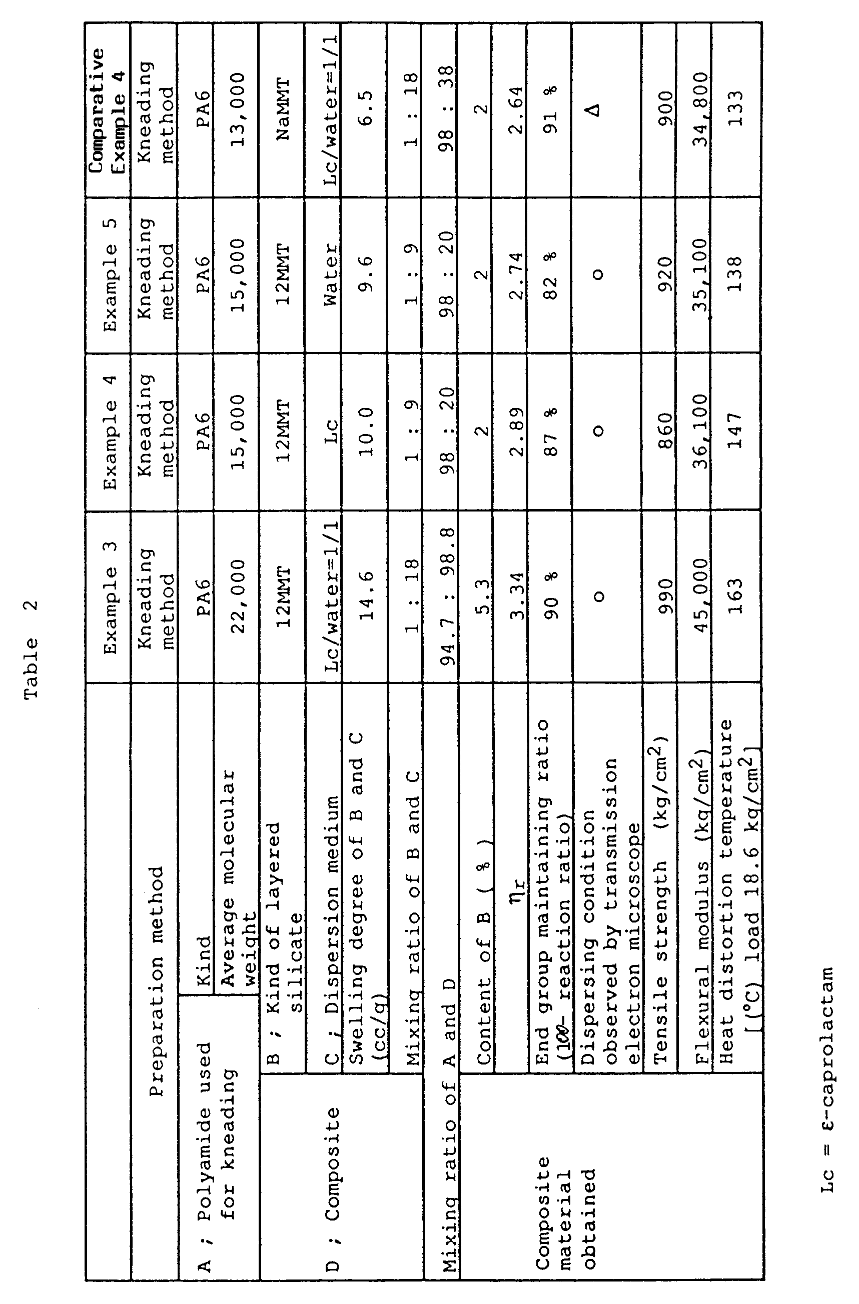

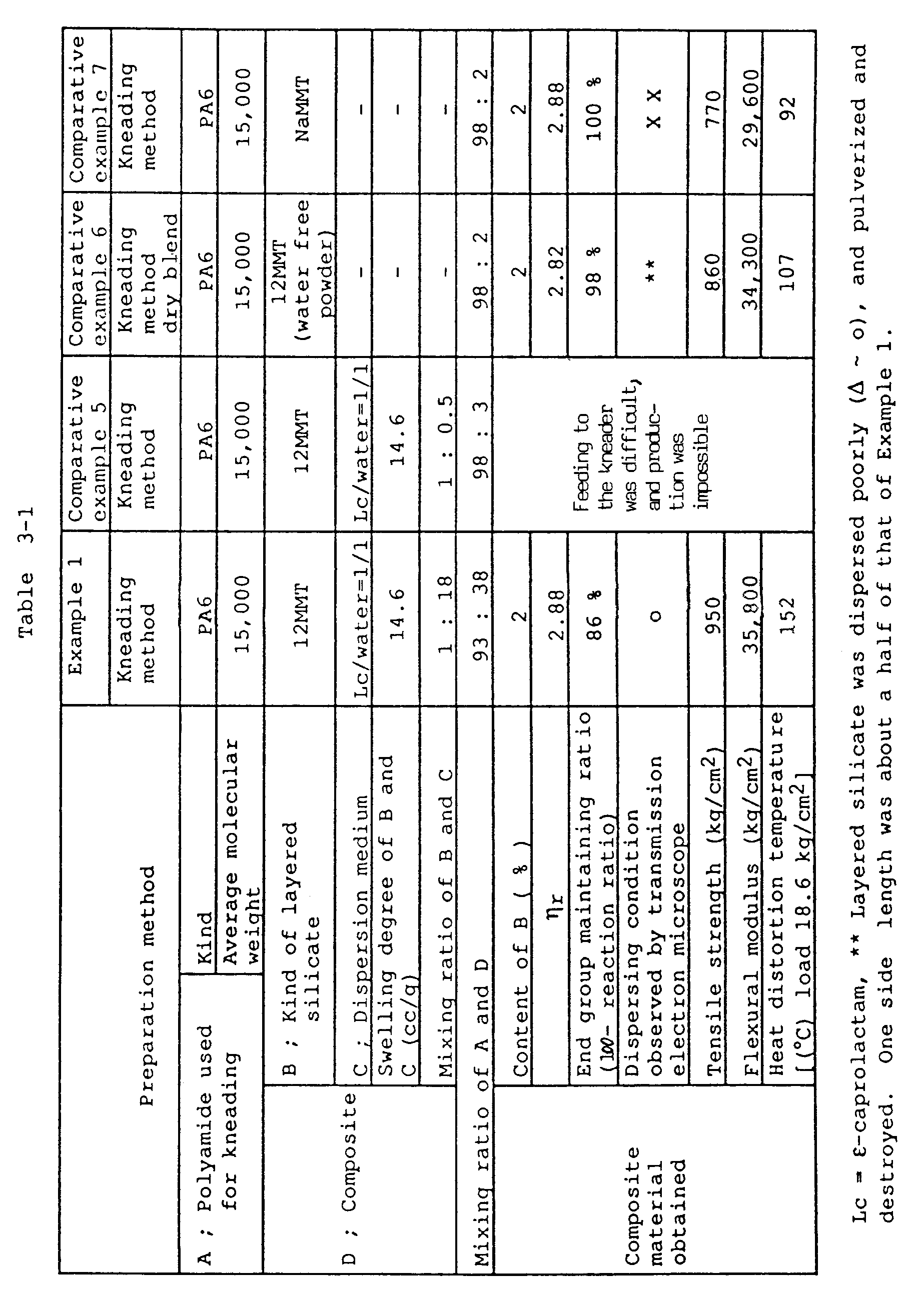

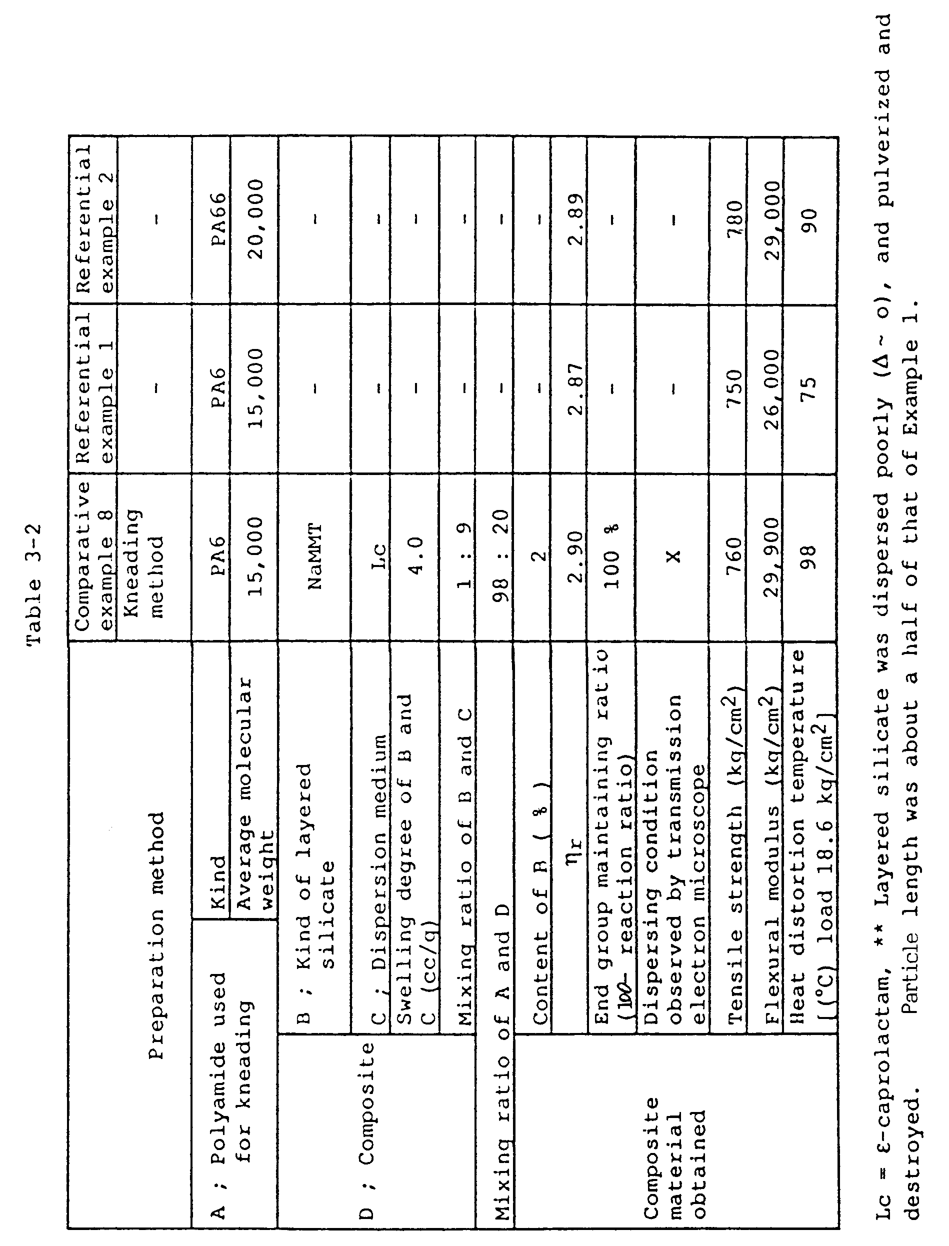

The present invention provides a polyamide composite material in which layered silicate is uniformly dispersed without blocking the amino end groups which impart various characteristics such as dye-affinity, printing property and whitening resistance to the polyamide resin.

The layered silicate can be uniformly dispersed at high contents in a wide variety of polyamide resins, with a broad range of molecular weights, in an economical and efficient manner.

## Claims

1. A method for producing a polyamide composite material having a layered phyllosilicate material uniformly dispersed in a matrix of polyamide polymer, characterised in that the method consists of the steps of:
(a) treating a layered phyllosilicate material formed from magnesium silicate or aluminium silicate having a cation exchange capacity of 50-200 milliequivalents per 100 g to replace any alkali metal ions or alkaline earth metal ions with at least one organic compound selected from the group consisting of ammonium salts, pyrridinium salts, sulphonium salts and phosphonium salts;
(b) mixing 100 parts by weight of the layered phyllosilicate material obtained from step (a) above with 100 to 5000 parts by weight of a dispersion medium which is selected such that the degree of swelling of the layered silicate in the dispersion medium is at least 5 cc/g; and
(c) blending the layered phyllosilicate material obtained from step (b) above with a polyamide polymer by kneading the constituent components in the following proportions by weight:
100 parts polyamide : 0.05-30 parts layered phyllosilicate.

2. A method as claimed in claim 1 wherein the organic compound is at least one selected from those having an octadecylammonium ion CH₃(CH₂)₁₇N⁺H₃, monomethyloctadecylammonium ion CH₃(CH₂)₁₇N⁺H₂(CH₃), dimethyloctadecylammonium ion CH₃(CH₂)₁₇N⁺H(CH₃)₂, dodecylammonium ion CH₃(CH₂)₁₁N⁺H₃, 4-amino-n-butyric acid ion H₃⁺N(CH₂)₃COOH, 6-amino-n-caproic acid ion H₃⁺N(CH₂)₅COOH, 8-aminocaprylic acid ion H₃⁺N(CH₂)₇COOH, 10-aminodecanoic acid ion H₃⁺N(CH₂)₉COOH, 12-aminododecanoic acid ion H₃⁺N(CH₂)₁₁COOH, 14-aminotetradecanoic acid ion H₃⁺N(CH₂)₁₃COOH, 16-aminohexadecanoic acid ion H₃⁺N(CH₂)₁₅COOH or 18-aminooctadecanoic acid ion H₃⁺N(CH₂)₁₇COOH.

3. A method as claimed in any preceding claim wherein the dispersion medium is at least one selected from water, methanol, ethanol, propanol, isopropanol, ethylene glycol, 1,4-butane diol, glycerine, dimethyl sulphoxide, N,N-dimethylformamide, acetic acid, formic acid, pyridine, aniline, phenol, nitrobenzene, acetonitrile, acetone, methyl ethyl ketone, chloroform, carbon disulphide, propylene carbonate, 2-methoxyethanol, ether, carbon tetrachloride, n-hexane, ε-caprolactam, ω-lauric lactam, aminocaproic acid and aminododecanoic acid.

## Patentansprüche

1. Verfahren zur Herstellung eines Polyamid-Verbundmaterials, das in einer Matrix von Polyamid-Polymer gleichmäßig dispergiertes geschichtetes Phyllosilikatmaterial aufweist, dadurch gekennzeichnet, daß das Verfahren aus den Schritten besteht:
(a) Behandlung eines geschichteten Phyllosilikatmaterials aus Magnesiumsilikat oder Aluminiumsilikat, das eine Kationen-Austauschkapazität von 50 bis 200 Milliäquivalenten pro 100g hat, um alle Alkalimetall-Ionen oder Erdalkalimetall-Ionen durch eine organische Verbindung zu ersetzen, die aus der Gruppe ausgewählt ist, die aus Ammoniumsalzen, Pyrridiumsalzen, Sulfoniumsalzen und Phosphoniumsalzen besteht,
(b) Mischung von 100 Gewichtsteilen des bei Schritt (a) erhaltenen geschichteten Phyllosilikatmaterials mit 100 bis 5000 Gewichtsteilen eines Dispersionsmittels, das so ausgewählt ist, daß das Maß an Quellung des geschichteten Silikats in dem Dispersionsmedium wenigstens 5 cm³/g ist; und
(c) Mischung des bei Schritt (b) erhaltenen geschichteten Phyllosilikatmaterials mit einem Polyamidpolymer durch Kneten der Bestandteile in den folgenden Gewichtsanteilen:
100 Teile Polyamid: 0,05 - 30 Teile geschichtetes Phyllosilikat.

2. Verfahren nach Anspruch 1, bei dem die organische Verbindung wenigstens eine aus solchen Verbindungen ausgewählte ist, die ein Octadecylammonium-Ion CH₃(CH₂)₁₇N⁺H₃, ein Monomethyloctadecylammonium-Ion CH₃(CH₂)₁₇N⁺H₂(CH₃), ein Dimethyloctadecylammonium-Ion CH₃(CH₂)₁₇N⁺H(CH₃)₂, ein Dodecylammonium-Ion CH₃(CH₂)₁₁N⁺H₃, ein 4-amino-n-Buttersäure-Ion H₃⁺N(CH₂)₃COOH, ein 6-amino-n-Capronsäure-Ion H₃⁺N(CH₂)₅COOH, ein 8-aminocaprylsäure-Ion H₃⁺N(CH₂)₇COOH, ein 10-aminodecansäure-Ion H₃⁺N(CH₂)₉COOH, ein 12-aminododecansäure-Ion H₃⁺N(CH₂)₁₁COOH, ein 14-aminotetradecansäure-Ion H₃⁺N(CH₂)₁₃COOH, ein 16-aminohexadecansäure-Ion H₃⁺N(CH₂)₁₅COOH oder ein 18-aminooctadecansäure-Ion H₃⁺N(CH₂)₁₇COOH hat.

3. Verfahren nach einem der vorhergehenden Ansprüche, bei dem das Dispersionsmittel wenigstens eines ist, das ausgewählt ist von Wasser, Methanol, Ethanol, Propanol, Isopropanol, Ethylenglycol, 1,4-Butandiol, Glycerin, Dimethylsulphoxid, N-N-Dimethylformamid, Essigsäure, Ameisensäure, Pyridin, Anilin, Phenol, Nitrobenzol, Acetonitril, Aceton, Methylethylketon, Chloroform, Schwefelkohlenstoff, Propylenkarbonat, 2-Methoxyethanol, Ether, Tetrachlorkohlenstoff, n-Hexan, ε-Caprolactam, ω-Laurinlactam, Aminocapronsäure und Aminododecansäure.

## Revendications

1. Procédé de préparation d'un matériau composite polyamidique comportant un matériau phyllosilicatique feuilleté uniformément dispersé dans une matrice de polymère de polyamide, caractérisé en ce que le procédé consiste en les étapes de:
(a) traitement d'une couche de matériau phyllosilicaté feuilleté formé à partir de silicate de magnésium ou de silicate d'aluminium présentant une capacité d'échange cationique de 50 à 200 milliéquivalents par 100 g pour remplacer tout ion de métal alcalin ou ion de métal alcalino-terreux par au moins un composé organique choisi dans le groupe consistant en sels d'ammonium, sels de pyridinium, sels de sulfonium et sels de phosphonium;
(b) malaxage de 100 parties en poids de matériau phyllosilicatique feuilleté obtenu dans l'étape (a) ci-dessus avec 100 à 5000 parties en poids d'un milieu de dispersion qui est choisi de telle manière que le taux de gonflement du silicate feuilleté dans le milieu de dispersion soit d'au moins 5 cm³/g; et
(c) mélange du matériau phyllosilicatique feuilleté obtenu dans l'étape (b) ci-dessus avec un polymère de type polyamide par pétrissage des composants constitutifs dans les proportions suivantes en poids:
100 parties de polyamide/0,05 à 30 parties de phyllosilicate feuilleté.

2. Un procédé selon la revendication 1, dans lequel le composé organique est au moins un de ceux qui sont choisis parmi ceux comportant
un ion octadécylammonium CH₃(CH₂)₁₇N⁺H₃,
un ion monométhyloctadécylammonium CH₃-(CH₂)₁₇N⁺H₂(CH₃),
un ion diméthyloctadécylammonium CH₃(CH₂)₁₇N⁺H(CH₃)₂,
un ion dodécylammonium CH₃(CH₂)₁₁N⁺H₃,
un ion de l'acide 4-amino-n-butyrique H₃⁺N(CH₂)₅COOH,
un ion de l'acide 6-amino-n-caproïque H₃⁺N(CH₂)₅COOH,
un ion de l'acide 8-aminocaprylique H₃⁺N(CH₂)₇COOH,
un ion de l'acide 10-aminodécanoïque H₃⁺N(CH₂)₉COOH,
un ion de l'acide 12-aminododécanoïque H₃⁺N(CH₂)₁₁COOH,
un ion de l'acide 14-aminotétradécanoïque,
un ion de l'acide H₃⁺N(CH₂)₁₃COOH,
un ion de l'acide 16-aminohexadécanoïque, H₃⁺N(CH₂)₁₅COOH ou
un ion de l'acide 18-aminooctadécanoïque H₃⁺N(CH₂)₁₇COOH.

3. Un procédé selon l'une ou l'autre des revendications précédentes, dans lequel le milieu de dispersion comprend au moins un des composés choisis parmi eau, méthanol, éthanol, propanol, isopropanol, éthylèneglycol, 1,4-butanediol, glycérine, diméthylsulfoxyde, N,N-diméthylformamide, acide acétique, acide formique, pyridine, aniline, phénol, nitrobenzène, acétonitrile, acétone, méthyléthylcétone, chloroforme, disulfure de carbone, carbonate de propylène, 2-méthoxyéthanol, éther, tétrachlorure de carbone, n-hexane, ε-caprolactame, ω-laurique lactame, acide aminocaproïque et acide aminododécanoïque.
